# EUROPÄISCHE PATENTSCHRIFT

(11) **EP 4 321 742 B1**
(45) Veröffentlichungstag und Bekanntmachung des Hinweises auf die Patenterteilung: **31.12.2025**
(21) Anmeldenummer: 23184707.0
(22) Anmeldetag: 11.07.2023
(51) Int. Cl.: F02C 1/04

(54) **GASENTSPANNUNGSANLAGE MIT CO2-NEUTRALER PRODUKTION VON WASSERSTOFF**
GAS EXPANSION SYSTEM WITH CO2-NEUTRAL PRODUCTION OF HYDROGEN
INSTALLATION DE DÉTENTE DE GAZ AVEC PRODUCTION D'HYDROGÈNE NEUTRE EN CO2

(30) Priorität: 08.08.2022 DE 102022119872
(43) Veröffentlichungstag der Anmeldung: 14.02.2024
(73) Patentinhaber: Ontras Gastransport GmbH, 04129 Leipzig (DE)
(72) Erfinder: Päßler, Steffen, 14542 Werder (DE)
(74) Vertreter: Castell, Klaus

(56) Entgegenhaltungen:
- WO-A1-2023/001787
- US-A- 5 806 316
- US-A1- 2016 369 692

## Beschreibung

Die Erfindung betrifft eine Gasentspannungsanlage zur Entspannung und Mengensteuerung von Gas zum Einsatz zwischen einer ersten, gastromaufwärts gelegenen Gasquelle, wie ein Gastank, ein Gasmitteldrucknetz oder Gashochdrucknetz oder ein Kavernenspeicher und einer zweiten, gastromabwärts gelegenen Gassenke, wie ein Verbraucher, ein Gasniederdrucknetz oder eine Gasversorgungsleitung.

In der veröffentlichten US-Patentanmeldung US 2016/036692 A1 wird eine Gasentspannungsanlage offenbart, in welcher eine Gasentspannungsturbine den beim Entspannen des Gases erzeugten elektrischen Strom in eine Elektrolysezelle zur Elektrolyse von Wasser leitet. Abwärme der Elektrolysezelle wird darin wiederum verwendet, um das zu entspannende Gas vorzuheizen. Die Energie, die beim Entspannen von Gas gewonnen werden kann, auch nicht über die Elektrolyse von Wasser, reicht aber nicht, um das zu entspannende Gas im benötigten Umfang vorzuwärmen.

In der internationalen Patentanmeldung WO 2023-001787 A1 wird eine Gasentspannungsanlage offenbart, in welcher eine Gasentspannungsturbine den beim Entspannen des Gases erzeugten elektrischen Strom in eine Elektrolysezelle zur Elektrolyse von Wasser leitet. Der in der Elektrolysezelle entstehende und unter Druck stehende Sauerstoff wird zur Erhöhung der Energieausbeute einer weiteren Gasentspannungsanlage zugeführt. Auch diese zusätzliche Energie reicht nicht um das zu entspannende Gas im benötigten Umfang vorzuwärmen.

Aufgabe der Erfindung ist es daher, eine Gasentspannungsanlage zur Verfügung zu stellen, welche das zu entspannende Gas in benötigtem Umfang vorwärmt, und vorhandene Energie CO₂-neutral zur Verfügung stellt.

Die erfindungsgemäße Aufgabe wird gelöst durch eine Anlage mit den Merkmalen nach Anspruch 1. Weitere vorteilhafte Ausgestaltungen sind in den Unteransprüchen zu Anspruch 1 angegeben.

Die erfindungsgemäße Gasentspannungsanlage zeichnet sich aus durch mindestens einen ersten Wärmetauscher, und gasstromabwärts mindestens eine Gasentspannungsturbine, welche beim durchströmen mit Gas einen stromerzeugenden Generator antreibt, und weiter gasstromabwärts mindestens einen zweiten Wärmetauscher, wobei der stromerzeugende Generator eine Elektrolyse-Zelle mit elektrischem Strom versorgt, die Wasser elektrolysiert, und die Elektrolyse-Zelle im Wärmeschluss mit dem mindestens einen ersten Wärmetauscher steht, so dass die Abwärme der Elektrolysezelle das einströmende Gas erwärmt, und wobei der mindestens eine zweite Wärmetauscher im Wärmeschluss mit mindestens einer Wärmepumpe und mindestens einem dritten, atmosphärischen Wärmetauscher steht, wobei der stromerzeugende Generator auch die mindestens eine Wärmepumpe mit elektrischem Strom versorgt, wobei der Wärmeschluss des mindestens einen zweiten Wärmetauschers über je ein einstellbares Dreiwegeventil im Vorlauf und im Rücklauf alternativ mit der mindestens einen Wärmepumpe oder mit dem mindestens einem dritten, atmosphärischen Wärmetauscher gegeben ist. Diese Anlage zeichnet sich aus durch eine sehr effektive Nutzung der beim Entspannen erzeugten elektrischen Energie, einschließlich der erzeugten Abwärme in dem sekundären Energiegewinnungsschritt, der Wasserstoffproduktion.

Um einen saisonale, atmosphärische Temperaturänderung nutzen zu können, ist es vorgesehen, dass der Wärmeschluss des mindestens einen zweiten Wärmetauschers über je ein einstellbares Dreiwegeventil im Vorlauf und im Rücklauf alternativ mit der mindestens einen Wärmepumpe oder mit dem mindestens einem dritten, atmosphärischen Wärmetauscher gegeben ist. Die Wärmepumpe, die elektrischen Strom von der Gasentspannungsturbine benötigt, kann so im Winter betrieben werden und im Sommer, wenn die atmosphärischen Temperaturen hoch genug sind, dann kann ein atmosphärischer Wärmetauscher das Gas nach dem Entspannen wieder erwärmen. Der tatsächliche Umschaltzeitpunkt ist dann gegeben, wenn die atmosphärische Temperatur -10° unterschreitet, was in Mitteleuropa inzwischen ein eher selten gewordenes Wetterphänomen geworden ist. In nördlichen Ländern hingegen kann die Nutzung der Wärmepumpe über einen größeren Teil des Jahres vorteilhaft genutzt werden.

Um die Energiebilanz in der Gasentspannungsanlage besser zu kontrollieren, kann vorgesehen sein, dass eine Regelvorrichtung den Wärmefluss von der mindestens einen Elektrolyse-Zelle zu dem mindestens einen ersten Wärmetauscher so einstellt, dass das einströmende Gas nach Verlassen der Gasentspannungsturbine bis unmittelbar über den Taupunkt abgekühlt wird.

Eine erste Möglichkeit, die Energiebilanz in der Gasentspannungsanlage zu kontrollieren, kann gegeben sein durch ein durch die Regelvorrichtung angesteuertes Ventil, welches den Wärmestrom zwischen der mindestens einen Elektrolyse-Zelle und dem mindestens einen ersten Wärmetauscher kontrolliert.

Eine zweite Möglichkeit, die Energiebilanz in der Gasentspannungsanlage zu kontrollieren, kann gegeben sein durch ein die Regelvorrichtung angesteuertes Ventil, welches den Gasstrom zur Gasentspannungsturbine kontrolliert.

Die Erfindung wird anhand der folgenden Figuren näher erläutert. Es zeigt:

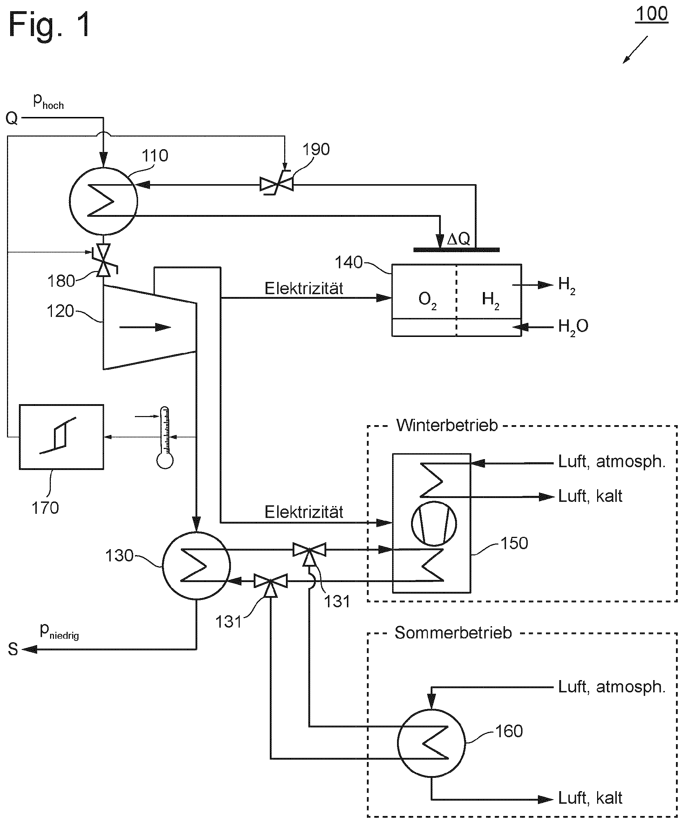

- Fig. 1: ein Blockschaltsymbol einer erfindungsgemäßen Gasentspannungsanlage.

In **Figur 1** ist ein Blockschaltsymbol einer erfindungsgemäßen Gasentspannungsanlage 100 skizziert. Die dort umrissene Gasentspannungsanlage 100 dient zur Entspannung und Mengensteuerung von Gas zum Einsatz zwischen einer ersten, gastromaufwärts gelegenen Gasquelle Q, wie ein Gastank, ein Gasmitteldrucknetz oder Gashochdrucknetz oder ein Kavernenspeicher und einer zweiten, gastromabwärts gelegenen Gassenke S, wie ein Verbraucher, ein Gasniederdrucknetz oder eine Gasversorgungsleitung. Da Gas in Kavernenspeichern oder in Überlandpipelines als Gasmitteldrucknetz oder sogar als Gashochdrucknetz unter hohem Druck steht, ist es notwendig, das Gas vor Einleiten beispielsweise in ein kommunales Gasniederdrucknetz zu entspannen. Die Entspannung, also die Herabsetzung des Drucks, geht aber mit einer starken Abkühlung des Gases einher. Dieser Abkühlungseffekt ist bekannt als Joule-Thomson-Effekt. Das unter hohem Druck stehende Gas kann zur Entspannung durch eine Entspannungsturbine geleitet werden, wo es unter Herabsetzung des eigenen Drucks unter Verringerung der eigenen Temperatur einen elektrischen Stromgenerator antreiben kann. Die dadurch erzeugte elektrische Energie ist nicht unerheblich und kann für weitere Zwecke genutzt werden. Um die Nutzung der in dem unter Druck stehenden Gases möglichst umfangreich auszunutzen, ist es vorgesehen, dass mindestens ein erster Wärmetauscher 110 und gasstromabwärts mindestens eine Gasentspannungsturbine 120 hintereinander angeordnet sind, wobei die Gasentspannungsturbine 120 beim durchströmen mit Gas einen stromerzeugenden Generator antreibt. Die Aufgabe des mindestens einen ersten Wärmetauschers 110 ist es, das unter Druck stehende Gas so weit vorzuwärmen, dass es sich nach Passage der Gasentspannungsturbine 120 gerade eben oberhalb des Taupunktes befindet. Die Temperatur des entspannten Gases soll also so hoch sein, dass in dem Gas enthaltene Feuchtigkeit gerade eben nicht durch Kondensation ausfällt. Weiter gasstromabwärts ist mindestens ein zweiter Wärmetauscher 130 vorgesehen, der die Temperatur des entspannten Gases wieder erhöht und so vom Taupunkt entfernt. Der durch die Gasentspannungsturbine 120 angetriebene und stromerzeugende Generator versorgt eine Elektrolyse-Zelle 140 zur Wasser-Elektrolyse mit elektrischem Strom. Der dabei erhaltene Wasserstoff kann in ein bestehendes Wasserstoff-Netzwerk eingeleitet werden oder aber dem entspannten Gas zugemischt werden. Die Elektrolyse-Zelle 140 steht im Wärmeschluss mit dem mindestens einen ersten Wärmetauscher 110, so dass die Abwärme der Elektrolyse-Zelle 140 das einströmende Gas erwärmt. Die Elektrolyse-Zelle 140 ist dadurch in zweifacher Hinsicht attraktiv. Zum einen erzeugt sie nutzbaren Wasserstoff und die sonst nicht nutzbare Abwärme, die durch die Überspannung des Wasserstoffes an den Elektroden der Elektrolyse-Zelle entsteht, und wärmt das zu entspannende Gas auf, so dass die Wärmeenergie im Energiekreislauf zwischen Gasentspannungsturbine 120 und Elektrolyse-Zelle erhalten bleibt. Der Nutzungsgrad der im unter Druck stehenden Gases ist damit relativ hoch. Der der Gasentspannungsturbine 120 folgende mindestens eine zweite Wärmetauscher 130 steht selbst im Wärmeschluss mit mindestens einer Wärmepumpe 150 und mit mindestens einem dritten, atmosphärischen Wärmetauscher 160. Dabei wird die mindestens eine Wärmepumpe 150 durch den stromerzeugenden Generator mit elektrischem Strom versorgt. Es ist möglich, dass die Wärmepumpe 150 im Winter das entspannte Gas vom Taupunkt entfernt und dass der mindestens eine dritte Wärmetauscher 160 das entspannte Gas im Sommer von Taupunkt entfernt. Da durch diesen saisonalen Alternativbetrieb im Sommer mehr elektrische Energie zur Verfügung steht, so dass die Elektrolyse-zelle 140 mehr Wasserstoff produzieren kann, ist es hilfreich, wenn eine Regelvorrichtung 170 vorhanden ist. Das einströmende und unter hohem Druck stehende Gas hat in der Regel über das Jahr eine gleichbleibende Temperatur. Die von dem zu entspannenden Gas in der Gasentspannungsturbine verrichtete Arbeit wird also stets etwa gleich groß sein, wenn das Gas bei konstantem Niederdruck bis eben über den Taupunkt entspannt wird. Um die Energiebilanz in der Gasentspannungsanlage 120 über das Jahr auszutarieren, kann die Regelvorrichtung 170 alternativ oder kumulativ die Menge des Gases kontrollieren, die pro Zeiteinheit in die Gasentspannungsturbine 120 geleitet wird und die Menge der Abwärme kontrollieren, die das unter Druck stehende Gas vorwärmt. Wird im Sommer weniger Energie von der Gasentspannungsturbine abgenommen, so kann das Gas auch soweit vorgewärmt werden, dass die Nacherwärmung in dem mindestens einen zweiten Wärmetauscher nicht mehr notwendig ist oder dass dort weniger Erwärmung stattfinden muss.

### BEZUGSZEICHENLISTE

| | | | |
|---|---|---|---|
| 100 | Gasentspannungsanlage | 180 | Ventil |
| 110 | erster Wärmetauscher | 190 | Ventil |
| 120 | Gasentspannungsturbine | | |
| 130 | zweiter Wärmetauscher | Q | Gasquelle |
| 131 | Dreiwegeventil | ΔQ | Wärme |
| 140 | Elektrolyse-Zelle | S | Gassenke |
| 150 | Wärmepumpe | p_{hoch} | Druck (hoch) |
| 160 | dritter Wärmetauscher | p_{niedrig} | Druck (niedrig) |
| 170 | Regelvorrichtung | | |

## Patentansprüche

1. Gasentspannungsanlage (100) zur Entspannung und Mengensteuerung von Gas zum Einsatz zwischen
- einer ersten, gastromaufwärts gelegenen Gasquelle (Q), wie ein Gastank, ein Gasmitteldrucknetz oder Gashochdrucknetz oder ein Kavernenspeicher,
- einer zweiten, gastromabwärts gelegenen Gassenke (S), wie ein Verbraucher, ein Gasniederdrucknetz oder eine Gasversorgungsleitung,
- mindestens einen ersten Wärmetauscher (110), und gasstromabwärts
- mindestens eine Gasentspannungsturbine (120), welche beim durchströmen mit Gas einen stromerzeugenden Generator antreibt, wobei
- der stromerzeugende Generator eine Elektrolyse-Zelle (140) mit elektrischem Strom versorgt, die Wasser elektrolysiert, und die Elektrolyse-Zelle (140) im Wärmeschluss mit dem mindestens einen ersten Wärmetauscher (110) steht, so dass die Abwärme der Elektrolysezelle (140) das einströmende Gas erwärmt, **gekennzeichnet durch** gasstromabwärts der Gasentspannungsanlage mindestens einen zweiten Wärmetauscher (130),
- der mindestens eine zweite Wärmetauscher (130) im Wärmeschluss mit mindestens einer Wärmepumpe (150) und mindestens einem dritten, atmosphärischen Wärmetauscher (160) steht, wobei der stromerzeugende Generator auch die mindestens eine Wärmepumpe (150) mit elektrischem Strom versorgt, wobei
der Wärmeschluss des mindestens einen zweiten Wärmetauschers (130) über je ein einstellbares Dreiwegeventil (131) im Vorlauf und im Rücklauf alternativ
- mit der mindestens einen Wärmepumpe (150) oder
- mit dem mindestens einem dritten, atmosphärischen Wärmetauscher (160)
gegeben ist.

2. Gasentspannungsanlage nach Anspruch 1,
**dadurch gekennzeichnet, dass**
eine Regelvorrichtung (170) den Wärmefluss von der mindestens einen Elektrolyse-Zelle (140) zu dem mindestens einen ersten Wärmetauscher (110) so einstellt, dass das einströmende Gas nach Verlassen der Gasentspannungsturbine (120) bis unmittelbar über den Taupunkt abgekühlt wird.

3. Gasentspannungsanlage nach Anspruch 2,
**dadurch gekennzeichnet, dass**
ein durch die Regelvorrichtung (170) angesteuertes Ventil (180) den Wärmestrom zwischen der mindestens einen Elektrolyse-Zelle (140) und dem mindestens einen ersten Wärmetauscher (110) kontrolliert.

4. Gasentspannungsanlage nach Anspruch 2,
**dadurch gekennzeichnet, dass**
ein durch die Regelvorrichtung (170) angesteuertes Ventil (190) den Gasstrom zur Gasentspannungsturbine (120) kontrolliert.

## Claims

1. A gas expansion system (100) for expanding and controlling the amount of gas for use between
- a first gas source (Q) located upstream of the gas flow, such as a gas tank, a medium-pressure gas network or high-pressure gas network or a cavern storage facility,
- a second gas sink (S), located downstream of the gas flow, such as a consumer, a low-pressure gas network or a gas supply line,
- at least one first heat exchanger (110),
and, downstream of the gas flow,
- at least one gas expansion turbine (120) which, when gas flows through it, drives an electricity-generating generator,
wherein
- the electricity-generating generator supplies an electrolysis cell (140) with electric current, the electrolysis cell (140) electrolyses water, and the electrolysis cell (140) is in thermal contact with the at least one first heat exchanger (110), so that the waste heat from the electrolysis cell (140) heats the inflowing gas,
***characterized by*** at least one heat exchanger (130) downstream of the gas expansion system,
- the at least one second heat exchanger (130) is in thermal contact with at least one heat pump (150) and at least one third, atmospheric heat exchanger (160), wherein the power-generating generator also supplies the at least one heat pump (150) with electrical power, wherein
the thermal contact of the at least one second heat exchanger (130) is provided, via a respective adjustable three-way valve (131) in the forward flow and in the return flow, alternatively
- with the at least one heat pump (150) or
- with the at least one third, atmospheric heat exchanger (160).

2. The gas expansion plant according to claim 1,
***characterised in that***
a regulation device (170) adjusts the heat flow from the at least one electrolysis cell (140) to the at least one first heat exchanger (110) in such a way that the inflowing gas is cooled to just above the dew point after leaving the gas expansion turbine (120).

3. The gas expansion system according to claim 2,
***characterised in that***
a valve (180) actuated by the regulation device (170) controls the heat flow between the at least one electrolysis cell (140) and the at least one first heat exchanger (110).

4. The gas expansion system according to claim 2,
***characterised in that***
a valve (190) actuated by the regulation device (170) controls the gas flow to the gas expansion turbine (120).

## Revendications

1. Installation de détente de gaz (100) pour la détente et le contrôle de la quantité de gaz, destinée à être utilisée entre
- une première source de gaz (Q), située en amont du flux de gaz, telle qu'un réservoir de gaz, un réseau de gaz à moyenne pression ou un réseau de gaz à haute pression ou un stockage en cavité,
- un deuxième puits de gaz (S), situé en aval du flux de gaz, tel qu'un consommateur, un réseau de gaz à basse pression ou une conduite d'alimentation en gaz,
- au moins un premier échangeur de chaleur (110),
et en aval du flux de gaz,
- au moins une turbine de détente de gaz (120) qui, lorsqu'elle est traversée par du gaz, entraîne un générateur de courant,
où
- le générateur de courant alimente en courant électrique une cellule d'électrolyse (140) qui électrolyse de l'eau, et la cellule d'électrolyse (140) est en contact thermique avec l'au moins un premier échangeur de chaleur (110), de sorte que la chaleur perdue de la cellule d'électrolyse (140) réchauffe le gaz entrant,
***caractérisée par*** au moins un deuxième échangeur de chaleur (130) en aval de l'installation de détente de gaz par rapport au flux de gaz,
- l'au moins un deuxième échangeur thermique (130) est en contact thermique avec au moins une pompe à chaleur (150) et au moins un troisième échangeur thermique atmosphérique (160), où le générateur de courant alimente également en courant électrique l'au moins une pompe à chaleur (150), où
le contact thermique de l'au moins un deuxième échangeur de chaleur (130) est assuré par l'intermédiaire d'une vanne à trois voies réglable (131) respective dans le flux aller et dans le flux retour, alternativement
- avec l'au moins une pompe à chaleur (150) ou
- avec l'au moins un troisième échangeur de chaleur atmosphérique (160).

2. Installation de détente de gaz selon la revendication 1,
***caractérisée en ce que***
un dispositif de régulation (170) règle le flux thermique de l'au moins une cellule d'électrolyse (140) vers l'au moins un premier échangeur de chaleur (110) de telle sorte que le gaz entrant est refroidi jusqu'à une température légèrement supérieure au point de rosée après avoir quitté la turbine de détente de gaz (120).

3. Installation de détente de gaz selon la revendication 2,
***caractérisée en ce que***
une vanne (180) actionnée par le dispositif de régulation (170) contrôle le flux thermique entre l'au moins une cellule d'électrolyse (140) et l'au moins un premier échangeur de chaleur (110).

4. Installation de détente de gaz selon la revendication 2,
***caractérisée en ce que***
une vanne (190) actionnée par le dispositif de régulation (170) contrôle le flux de gaz vers la turbine de détente de gaz (120).
